# EUROPEAN PATENT SPECIFICATION

(11) **EP 1 985 412 B1**
(45) Date of publication and mention of the grant of the patent: **07.07.2010**
(21) Application number: 08153702.9
(22) Date of filing: 31.03.2008
(51) Int. Cl.: B23Q 11/08

(54) **Protection apparatuses**
Schutzgeräte
Appareils de protection

(30) Priority: 24.04.2007 IT MO20070141
(43) Date of publication of application: 29.10.2008
(73) Proprietor: SCM Group S.p.A., 47900 Rimini (IT)
(72) Inventor: Grassi, Giancarlo, 47834 Montefiore Conca (RN) (IT)
(74) Representative: Crugnola, Pietro

(56) References cited:
- EP-A- 1 046 460
- EP-A- 1 413 393
- EP-A- 1 840 448
- DE-A1- 10 325 361
- DE-U1-202006 004 730
- US-A- 4 635 699
- US-A1- 2005 095 074
- US-A1- 2006 269 375

## Description

The invention relates to protection apparatuses for protecting against blunt instruments.

In particular, the invention relates to protection apparatuses for protecting against tool fragments or machining chips ejected at high speed from an operating unit of a machine tool for machining workpieces made of wood or similar materials.

The need to provide a machine tool with protection apparatuses is felt particularly in the field of machine tools in which so-called pendulum machining is provided.

Pendulum machining can be achieved in machine tools provided with a machining plane that is sufficiently extended to be able to be divided into at least a pair of machining stations and pendulum machining provides that, whilst in a first machining station a workpiece is machined, in a second machining station a further workpiece that is to be machined or a further workpiece that has just been machined is respectively loaded/unloaded.

This means that, if suitable protection apparatuses were not provided for such machine tools, an operator placed near the machine tools could be hit by tool fragments or machining chips ejected at high speed from the operating unit, such tool fragments or machining chips could compromise, even seriously, the physical wellbeing of the operator.

Machine tools for machining workpieces made of wood or similar materials and which are suitable for pendulum machining comprise a base, extending along a first horizontal axis, on which a machining plane is positioned that is sufficiently extended to define a first and a second machining station for receiving corresponding workpieces to be machined.

The base is laterally provided with first guides extending parallel to the first axis and slidably supporting a carriage.

The carriage comprises a crosspiece on which a slide is slidable, parallel to a second axis that is horizontal and perpendicular to the aforesaid first axis.

On the slide is slidable, parallel to a third axis vertical and perpendicular to the first axis and to the second axis, an operating unit, for example an electro-spindle which is arranged for performing the desired machinings, the first axis, the second axis and the third axis defining a tern of axes that are orthogonal to one another.

In this manner, the operating unit, in use, is movable parallel to the first axis, the second axis and the third axis to perform movements controlled by a numeric control unit.

Such machine tools further comprise a protection apparatus for separating the first machining station and/or the second machining station from an operator placed near the stations, so as to protect the operator against the blunt instruments ejected, in use, at a high speed from the operating unit.

DE10325361 discloses a protection apparatus consisting of a machine guard which has side walls as well as front and rear walls which slide on rails with the tool holder connected by a cable loom to the supplies. The guard is held locked by bolts and brackets. Further protection apparatuses are known comprising a first baffle and a second baffle slidably supported by the aforesaid first guides and movable with respect to the operating unit.

The first baffle and the second baffle are shaped to as to overhang at least partially the machining plane and are positioned on opposite sides with respect to the operating unit.

The first baffle and the second baffle are arranged, in use, for cooperating with first panels and with second panels, the first panels and the second panels being slidable along second guides obtained in a floor and extending parallel to the first axis, for separating and bounding respectively the first machining station and the second machining station.

In particular, the first and the second panels are moved manually by an operator, between a first configuration, in which they are substantially overlapped and enable the operator to access respectively the first and the second machining station, and a second configuration, in which they are substantially alongside and prevent the operator accessing respectively the first and the second machining station.

A drawback of known protection apparatuses is that they are not very flexible.

In fact, each of said protection apparatuses is suitable for being mounted on a specific machine tool.

Further, these apparatuses have to be set up when the machine tool is installed, which entails significant loss of time.

In fact, it is necessary to mount the first baffle and the second baffle on the first guide, to obtain the second guides in the floor and to mount the first and the second slidable panels on the second guides.

Further, these protection apparatuses are difficult to install on machine tools that are initially devoid thereof. In fact, it could be necessary to mount suitable guides on the base for slidably supporting the first baffle and the second baffle, if these machines were devoid of the first guides or such first guide were unsuitable for supporting the first and the second baffle, as well as to obtain the second guides on the floor.

A further drawback of the aforesaid apparatuses is that the first and the second slidable, particularly heavy panels are difficult to move.

In fact, the first and the second panels are moved manually by the operator, with consequent loss of time and reduction in the productivity of the machine tool, in particular during pendulum machining.

Further, the first and the second panels can easily become jammed in the event of dirt becoming deposited in the second guides obtained in the floor.

An object of the invention is to improve the protection apparatuses for protecting against blunt instruments ejected from an operating unit of a machine tool for machining workpieces made of wood or similar materials.

A further object is to provide flexible protection apparatuses.

A still further object is to obtain protection apparatuses that are easy to move.

The invention relates to a protection apparatus as defined in claim 1.

Owing to the invention it is possible to provide a protection apparatus that is particularly flexible and consequently associable with different types of machine tools.

In fact, said protection apparatus is separated from said machine tool and can be set up independently of, and successively or previously to, the machine tool installation.

This is made possible by the fact that said barrier means, comprising a pair of baffles and one or more door elements, is slidably supported by said guide means of said supporting structure, the latter being positionable near any machine tool.

This means that it is no longer necessary to provide a machine tool with guides for supporting the aforesaid pair of baffles and obtaining further guides in the floor for slidably supporting the aforesaid door elements.

Further, said guide means can be mounted suspended on said supporting structure, which noticeably reduces the possibility that dirt is deposited therein.

In an aspect of the invention, there is provided a protection apparatus for protecting against a blunt instrument ejected from an operating unit of a machine tool for machining workpieces made of wood or similar materials, comprising baffle means overhanging at least partially a machining plane of said machine tool and movable with respect to said operating unit, slidable panel means cooperating with said baffle means to define a machining area of said operating unit for separating said operating unit from an operator placed near the operating unit, and connecting means for connecting said baffle means to said panel means, so that said panel means is moved by said baffle means. Owing to this aspect of the invention it is possible to move said panel means rapidly and automatically.

In fact, said panel means, suitably connected by said connecting means to said baffle means, is hauled, in use, by the baffle means.

The invention can be better understood and implemented with reference to the attached drawings that illustrate some embodiments thereof by way of non-limiting example, in which:
Figure 1 is a perspective view of a protection apparatus for protecting against blunt instruments in a first operating configuration and positioned near a machine tool;
Figure 2 is a perspective view of the protection apparatus in Figure 1;
Figure 3 is a lateral view of the protection apparatus in
Figure 2;

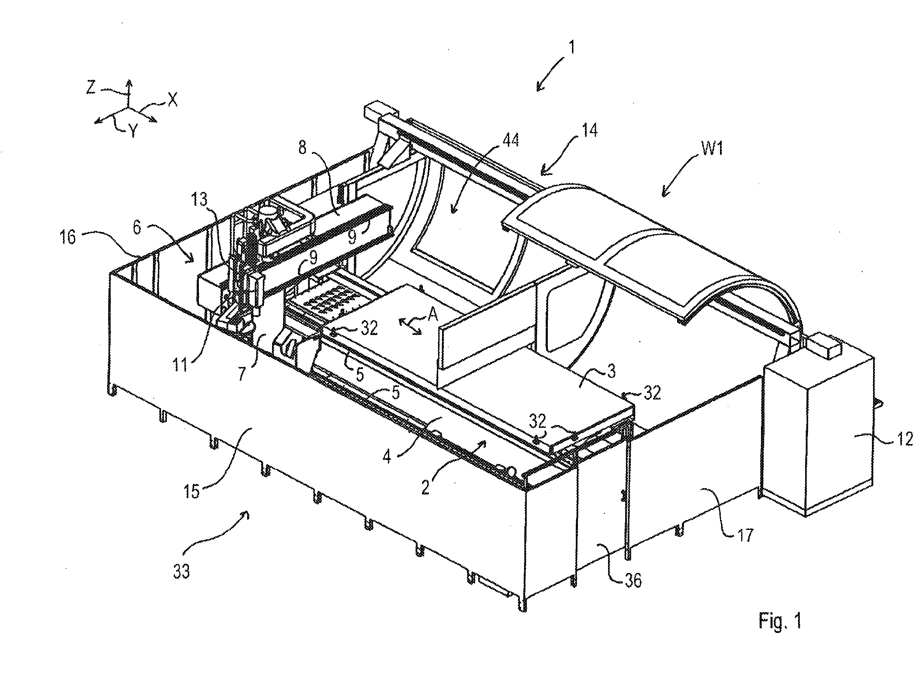

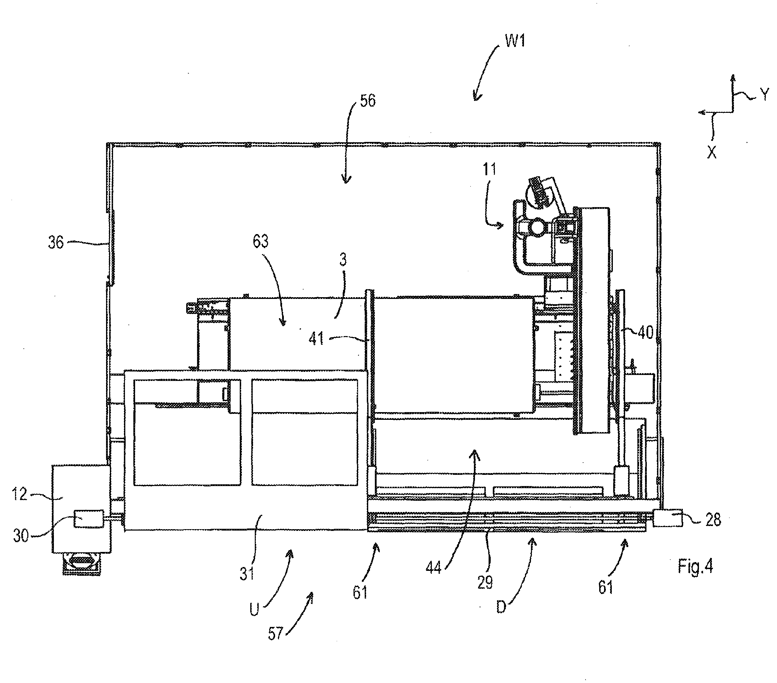

Figure 4 is a top view of Figure 1;

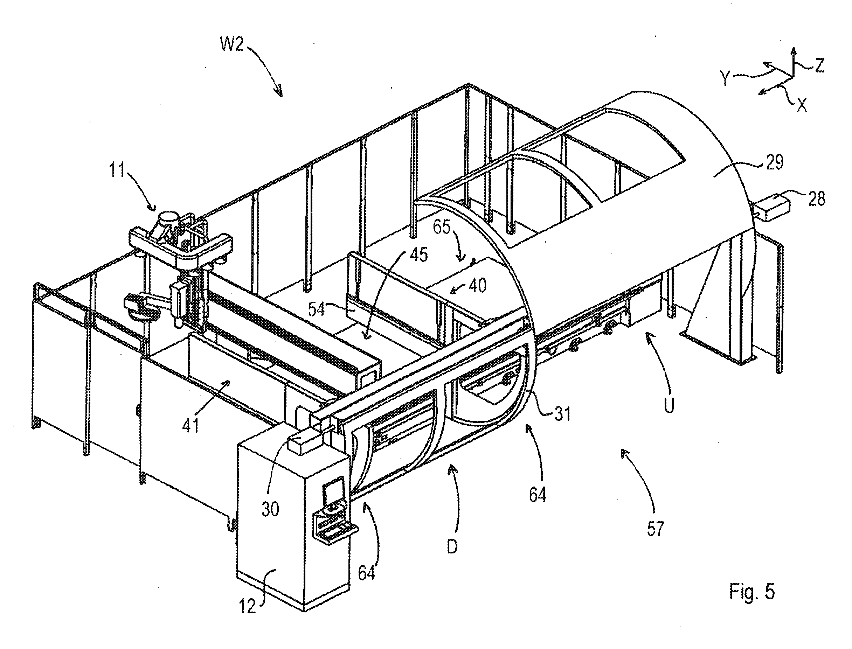

Figure 5 is a perspective view like that of Figure 1 with the protection apparatus in a second machining configuration;

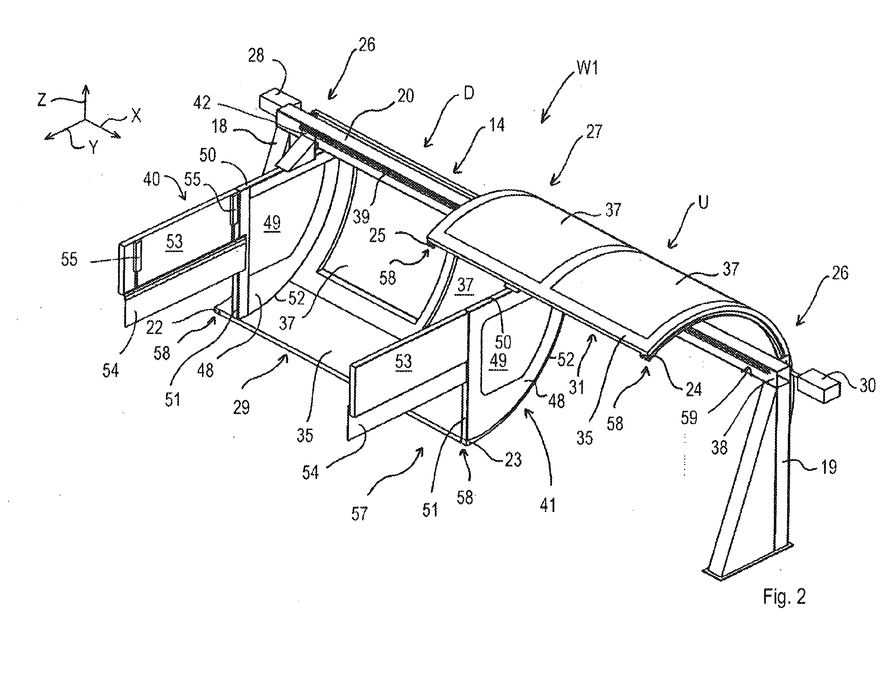

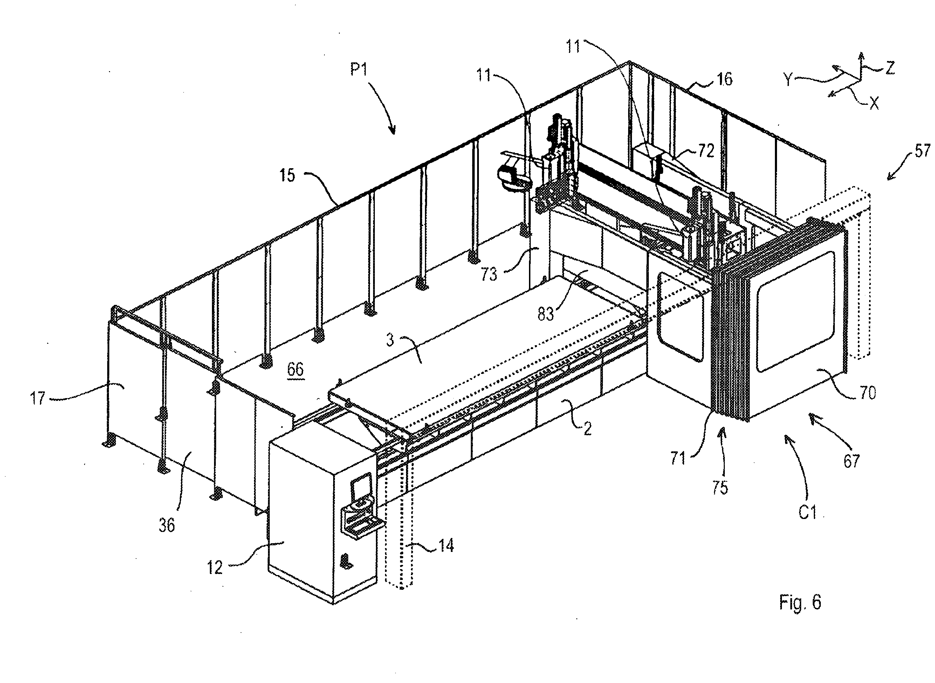

Figure 6 is a perspective view of a further embodiment of the protection apparatus in Figure 2 in a first machining position and positioned near a machine tool;

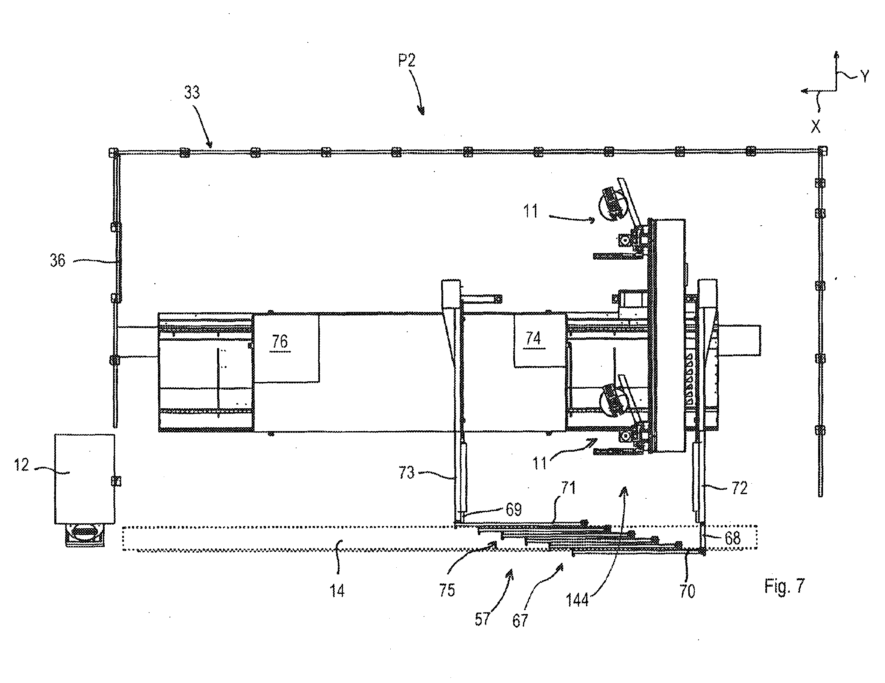

Figure 7 is a top view of the apparatus in Figure 6 in a second machining position;

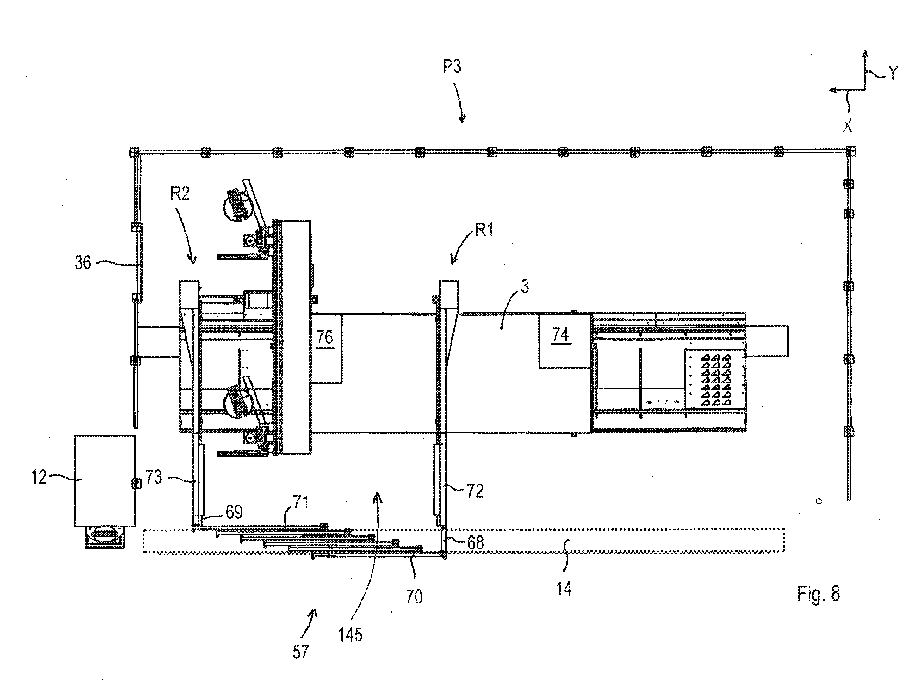

Figure 8 is a top view of the apparatus in Figure 6 in a third machining position;

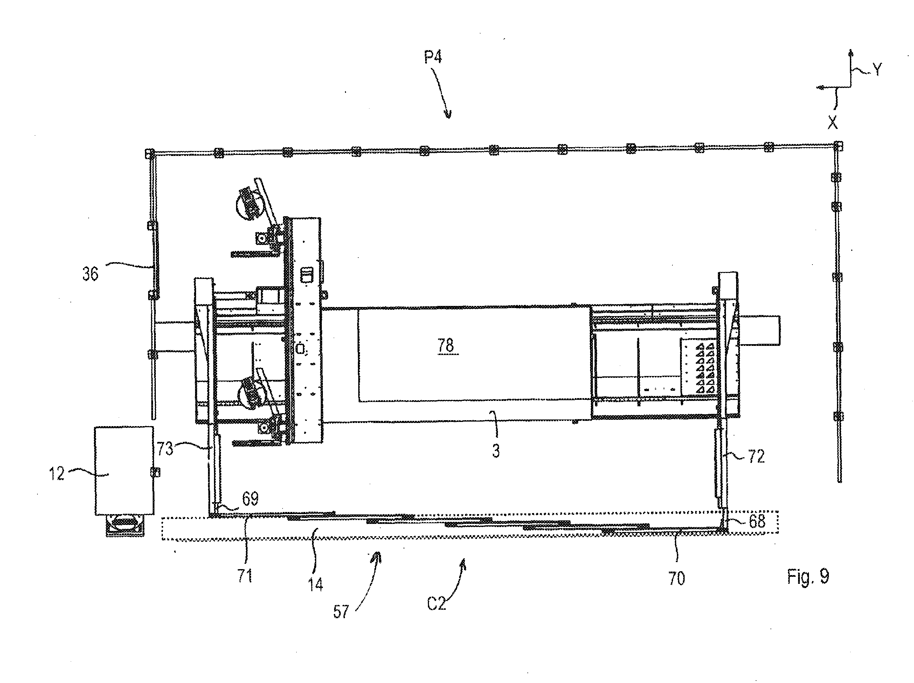

Figure 9 is a top view of the apparatus in Figure 6 in a fourth machining position.

With reference to Figure 1, there is shown a machine tool 1 for machining workpieces made of wood or similar materials.

The machine tool 1 comprises a base 2, extending substantially parallel to a first substantially horizontal axis X.

The base 2 supports a substantially flat and horizontal machining plane 3, that is laterally provided with a plurality of abutments 32 for positioning the workpieces easily and precisely.

The base 2 comprises a side surface 4 extending substantially parallel to the first axis X.

The side surface 4 is provided with first guide elements 5 that are mutually parallel and extend substantially parallel to the first axis X.

The first guide elements 5 slidably support a carriage 6, substantially having the shape of an upturned "L".

In an embodiment of the invention, which is not shown, the carriage 6 has a substantially portal shape.

The carriage 6 comprises an upright 7, with a substantially parallelepipedon shape, extending substantially parallel to a second axis Z, substantially vertical and perpendicular to the first axis X.

The upright 7 is provided with the first sliding block elements, which are not shown, arranged for engaging with the first guide elements 5 to enable the upright 7, and thus the carriage 6, to slide substantially parallel to the first axis X along an advance direction A.

The carriage 6 further comprises a parallelepipedon-shaped crosspiece 8 supported by the upright 7.

The crosspiece 8 is substantially perpendicular to the upright 7 and extends substantially parallel to a third axis Y, substantially horizontal and perpendicular to the first axis X and to the second axis Z, the first axis X, the second axis Z and the third axis Y defining a triad of axes that are orthogonal to one another.

The crosspiece 8 is provided with second guide elements 9, extending substantially parallel to the third axis Y and arranged for engaging with second sliding block elements, which are not shown, of a slide 13.

In this manner, the slide 13 is movable substantially parallel to the third axis Y.

The slide 13 is provided with third guide elements, which are not shown, extending substantially parallel to the second axis Z, arranged for engaging with corresponding third sliding block elements, which are not shown, of an operating unit 11, for example an electro-spindle, arranged for performing the desired machinings.

In this manner, the operating unit 11, which is movable parallel to the first axis X, to the second axis Z and the third axis Y, can perform respective controlled movements inasmuch as it is controlled by a numeric control unit 12.

This enables the operating unit 11 to perform a multiplicity of movements so as to be able to perform a plurality of desired machinings.

In an embodiment of the invention, which is not shown, the crosspiece 8 can support several slides 13 and consequently several operating units 11.

As shown in Figure 1, the machine tool 1 is inserted into a machining cell 33, having a rectangular-shape plan and defining a machining area for the operating unit 11.

The machining cell 33 comprises a first wall 15 extending substantially parallel to the first axis X, a second wall 16 and a third wall 17, that are opposite one another and extend substantially parallel to the third axis Y.

The machining cell 33 is further provided with a service door 36, slidably substantially parallel to the third axis Y, obtained in the third wall 17, from which an operator can access a rear part 56 (Figure 4) of the machine tool 1 to perform, for example, maintenance operations.

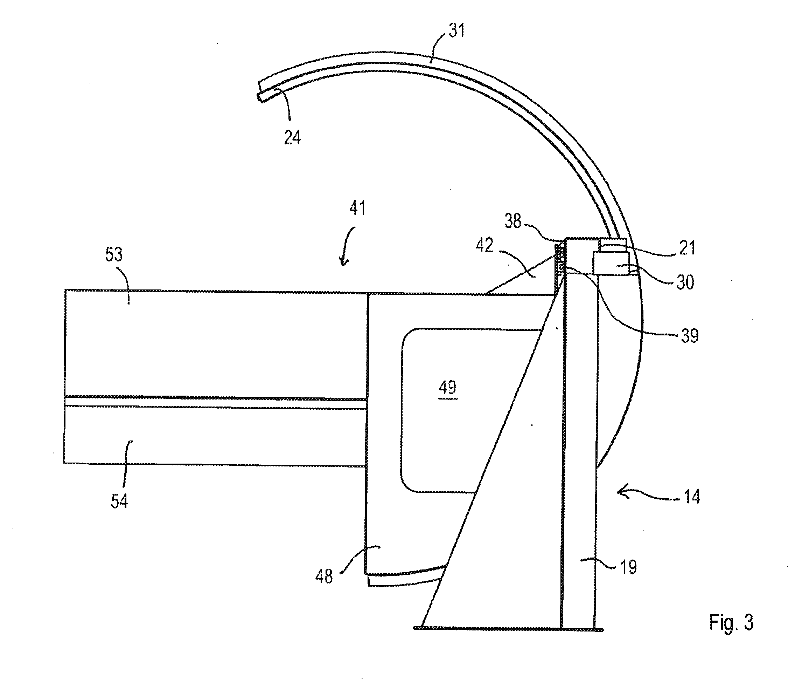

The machining cell 33 further comprises a supporting structure 14, shown in detail in Figures 2 and 3, shaped as a portal and facing the first wall 15.

The supporting structure 14 is arranged for slidably supporting a protection apparatus 57 for separating the operating unit 11 from an operator placed near the operating unit.

The supporting structure 14 is positioned near the machine tool 1 and comprises a first upright element 18 and a second upright element 19 that are mutually opposite and extending substantially parallel to the second axis Z.

The supporting structure 14 further comprises a crosspiece element 20 extending substantially parallel to the first axis X and supported by the first upright element 18 and by the second upright element 19.

The supporting structure 14 comprises a first side 21 (Figure 3) on which is positioned first guide means 58.

The first guide means 58 comprises a first guide 22, a further first guide 23, a second guide 24 and a further second guide 25.

In particular, the first guide 22 and the second guide 24 are fixed to opposite end zones 26 of the supporting structure 14, whilst the further first guide 23 and the further second guide 25 are fixed to an intermediate zone 27 of the supporting structure 14.

The first guide 22, the further first guide 23, the second guide 24 and the further second guide 25 extend along an arc path, outside the advance direction A, and are substantially "C"-shaped.

In particular, the first guide 22 and the further first guide 23 are rotated around a rotation axis substantially parallel to the first axis X by a first motor 28 and support a first door element 29 of the protection apparatus 57, whilst the second guide 24 and the further second guide 25 are rotated around the aforesaid rotation axis by a second motor 30 and support a second door element 31 of the protection apparatus 57.

In this manner, the first door element 29 and the second door element 31, extending along respective curved surfaces 35, are movable, independently of one another, between a raised position U and a lowered position D in which they respectively enable/prevent the operator to access the machining area.

In an embodiment of the invention, not illustrated, the first guide 22, the further first guide 23, the second guide 24 and the further second guide 25 are fixed.

In this embodiment, the first door element 29 is driven to slide along the first guide 22 and the further first guide 23 by a first motor unit, whilst the second door element 31 is driven to slide along the second guide 24 and the further second guide 25 by a second motor unit.

In a further embodiment of the invention, which is not shown, the first door element 29 and the second door element 31 are supported only by the first guide 22 and by the second guide 24.

In other words, in this embodiment, neither the further first guide 23 or the further second guide 25 is provided.

In a still further embodiment of the invention, which is not shown, the first guide means 58 extends substantially parallel to the second axis Z and supports a further first door element and a further second door element, that are substantially flat.

In this embodiment further motors are further provided for moving the further first door element and the further second door element along the first guide means 58.

In another embodiment of the invention, which is not shown, the first guide means 58 extends substantially parallel to the first axis X and supports first slidable panels and second slidable panels, the first slidable panels and the second slidable panels being substantially flat.

In this embodiment still further motors are further provided for moving the first panels and the second panels along the first guide means 58.

The first door element 29 and the second door element 31 each comprise transparent screens 37, that, in addition to lightening the first door element 29 and the second door element 31, enable the operator to see inside the machining area.

The supporting structure 14 further comprises a second side 38, opposite the first side 21.

On the second side 38 second guide means 59 is fixed comprising a third guide 39 extending substantially parallel to the first axis X.

The third guide 39 slidably supports sliding block means 42 of a first barrier element 40 and of a second barrier element 41 of the protection apparatus 57.

The first barrier element 40 and the second barrier element 41 cooperate, in use, with the first door element 29 and the second door element 31 to define a first machining space 44 (Figure 1) and a second machining space 45 (Figure 5) of the machining area, arranged for separating, in use, the operating unit 11.

The first barrier element 40 and the second barrier element 41, mutually parallel and extending substantially parallel to the third axis Y, are positioned on opposite sides to the operating unit 11.

In other words, the first barrier element 40 together with the second barrier element 41 defines a gap, in which the carriage 6 supporting the operating unit 11 is positioned.

The first barrier element 40 and the second barrier element 41 substantially have the shape of an upturned "L" and can be made of sheet metal or equivalent materials.

In an embodiment of the invention, the first barrier element 40 and the second barrier element 41 substantially have the shape of an upturned "U".

The first barrier element 40 and the second barrier element 41 each comprise a further upright element 48, substantially having the shape of an angular sector.

The further upright element 48 comprises a first edge 50 extending substantially parallel to the third direction Y and fixed to the sliding block means 42, a second edge 51 extending substantially parallel to the second axis Z, and a third curvilinear edge 52, having a curvature radius substantially the same as a curvature radius of the curved surface 35 of the first door element 29 and of the second door element 31.

In this manner, in use, when the first door element 29 or the second door element 31 are in the lowered position, the third edge 52 faces the respective curved surfaces 35 to prevent possible tool fragments or machining chips exiting the first machining space 44 or the second machining space 45.

In an embodiment of the invention, which is not shown, the further upright element 48 has a substantially rectangular shape and the first door element 29 and the second door element 31 are substantially flat.

The further upright element 48 further comprises a further transparent screen 49 arranged for lightening the first barrier element 40 and the second barrier element 41 and for enabling the operator to see inside the machining cell 33.

The first barrier element 40 and the second barrier element 41 each comprise a further crosspiece element 53, extending substantially parallel to the third axis Y.

The further crosspiece element 53 is fixed to the second edge 51 of the further upright element 48 and overhangs, in use, the machining plane 3.

On the further crosspiece element 53 screen means 54 is further mounted, facing, in use, the machining plane 3.

The substantially parallelepipedon-shaped screen means 54, extends substantially parallel to the third axis Y for the entire length of the crosspiece means 19, and is movable substantially parallel to the second axis Z.

In particular, the further crosspiece element 53 is provided with actuators 55, for example linear or pneumatic actuators 55, arranged for raising and/or lowering the screen means 54.

The first barrier element 40 and the second barrier element 41 are further moved along the third guide 39, independently of one another, by a third and a fourth motor, which are not shown.

In an embodiment of the invention, which is not shown, there is provided connecting means for connecting the first barrier element 40 and the second barrier element 41 to the carriage 6, so that the first barrier element 40 and the second barrier element 41 are moved along the advance direction A by the carriage 6 that acts as a vector.

The operation of the protection apparatus 57 is disclosed below with reference to Figures 1, 4 and 5.

With reference to Figures 1 and 4 there is shown the protection apparatus 57 in a first operating configuration W1, in which the first door element 29 is in the lowered position D and the second door element 31 is in the raised position U.

In the first operating configuration W1, further, the first barrier element 40 and the second barrier element 41 are positioned substantially at ends 61 of the first door element 29 and the respective screen means 54 are lowered.

In this manner, in the first operating configuration W1 the first door element 29, the first barrier element 40 and the second barrier element 41 cooperate to define the first machining space 44 in which the operating unit 11 can machine a first workpiece, which is not shown, whilst the second door element 31, positioned in the raised position U, enables an operator to access a remaining portion 63 of the machining plane 3 to load a second workpiece that is to be machined, which is not shown.

With reference to Figure 5 there is shown the protection apparatus 57 in a second operating configuration W2, in which the first door element 29 is in the raised position U and the second door element 31 is in the lowered position D. In the second operating configuration W2, moreover, the first barrier element 40 and the second barrier element 41 are positioned substantially at further ends 64 of the second door element 31 and the respective screen means 54 is lowered.

In this manner, in the second operating configuration W2 the second door element 31, the first barrier element 40 and the second barrier element 41 cooperate to define the second machining space 45 in which the operating unit 11 can machine the second workpiece, whilst the first door element 29, positioned in the raised position U, enables an operator to access a further remaining portion 65 of the machining plane 3 to unload the previously machined first workpiece

It should be noted how it is easily possible, in the event of a fault or special maintenance tasks, to access the first machining space 44 and/or the second machining space 45 by simply positioning the first door element 29 and/or the second door element 31 in the raised position U.

It should further be noted how the first barrier element 40 and the second barrier element 41, when they move from the first machining configuration W1 to the second machining configuration W2, maintain the respective screen means 54 raised, so as not to damage the first workpiece that has just been machined and the second workpiece that is to be machined.

It should also be noted how it is possible to position simultaneously both the first door element 29 and the second door element 31 in the raised position U, for example for maintenance operations, or in the event of a fault, or in the lowered position D if a workpiece of large dimensions has to be machined.

In this latter case, the first barrier element 40 and the second barrier element 41 are positioned, for example in the case of a workpiece having a length substantially the same as that of the machining plane 3, substantially at still further opposite ends of the machining plane 3.

With reference to Figure 6, there is shown a further embodiment of the protection apparatus 57.

In this embodiment, the supporting structure 14, represented by a hatched line, comprises a plurality of guides, which are not shown, extending substantially parallel to the first axis X and facing a floor 66.

Along the aforesaid guides panels 67 are slidable that are mutually connected and movable between a first configuration C1 in which the panels 67 are substantially overlapped, and a second configuration C2, shown in Figure 9, in which the panels 67 are substantially positioned side by side.

In this embodiment, there is provided a further first barrier element 72 and a further second barrier element 73 substantially shaped as an upturned "U" and slidable along the first guide elements 5 of the base 2.

In a version of this embodiment, which is not shown, the further first barrier element 72 and the further second barrier element 73 are slidable along further guides extending substantially parallel to the first axis X and obtained on the supporting structure 14.

Further, in this embodiment there are provided a first connecting element 68 and a second connecting element 69 for connecting the further first barrier element 72 and the further second barrier element 73 respectively to a first end panel 70 and to a second end panel 71 of the aforesaid plurality of panels 67.

In this manner, the first end panel 70 and the second end panel 71, and the further panels 75 interposed therebetween, are moved along the advance direction A by the further first barrier element 72 and by the further second barrier element 73 that act as vectors.

It should be noted that the further first barrier element 72 and the further second barrier element 73 can be moved along the first guide elements 5 (or along the further guides), by the carriage 6 by the aforesaid connecting means, or can be provided with respective motor units.

The operation of the further embodiment of the protection apparatus 57 is disclosed below with reference to Figures 6 to 9.

In Figure 6 there is shown the protection apparatus 57 in a first machining position P1 in which the first connecting element 68 and the second connecting element 69 connect the further first barrier element 72 and the further second barrier element 73 respectively to the first end panel 70 and to the second end panel 71.

In the first machining position P1 the panels 70 are positioned in the first configuration C1 and further screen means 83 of the further first barrier element 72 and of the further second barrier element 73 are raised to enable the operator to load onto the machining plane 3 a further first workpiece 74 (Figure 7) to be machined.

In Figure 7 there is shown the protection apparatus 57 in a second machining position P2 in which the further second barrier element 73 has been positioned along the machining plane 3 at a distance from the further first barrier element 72 such as to enable the operating units 11 to machine the further first workpiece 74.

During this positioning, the further second barrier element 73 hauls, by the second connecting element 69, the second end panel 71, so as to define a further first machining space 144.

In the second machining position P2 the panels 67 are partially overlapped and the further screen means 83 is lowered to enable the operating units 11 to machine the further first workpiece 74.

Subsequently, whilst the operating units 11 machine the further first workpiece 74 the operator can access the machining cell 33 to position a further second workpiece 76 on the machining plane 3.

In Figure 8 there is shown the protection apparatus 57 in a third machining position P3 in which the further first barrier element 72 is positioned in an intermediate position R1 along the machining plane 3 whilst the further second barrier element 73 has been positioned in an end position R2 along the machining plane 3.

In other words, the further first barrier element 72 has been positioned at a distance from the further second barrier element 73 such as to enable the operating units 11 to machine the further second workpiece 76.

During this positioning, the further first barrier element 72 and the further second barrier element 73 haul, by the first connecting element 68 and the second connecting element 69, the first end panel 70 and the second end panel 71, and the further panels 75 therewith interposed therebetween, so as to define a further second machining space 145.

In the third machining position P3 the panels 67 are partially overlapped and the further screen means 83 is lowered to enable the operating units 11 to machine the further second workpiece 76.

Subsequently, whilst the operating units 11 machine the further second workpiece 76 the operator can unload from the machining plane 3 the further first workpiece 74 and still subsequently load onto the machining plane 3 a third workpiece, which is not shown, to be machined.

It should be noted that the further first barrier element 72 and the further second barrier element 73, when they are moved along the machining plane 3, maintain the respective further screen means 83 raised, so as not to damage the workpieces that have already been machined or that are to be machined.

In Figure 9, there is shown the protection apparatus 57 in a fourth machining position P4 in which it is possible to machine a fourth workpiece 78 of large dimensions.

In the fourth machining position P4 the further first barrier element 72 and the further second barrier element 73 are positioned substantially at the still further opposite ends of the machining plane 3.

It should be noted how the protection apparatus 57 is particularly flexible and consequently can be associated with different types of machine tools 1.

In fact, the protection apparatus 57 is separated from the machine tool 1 with which it has to be associated and can be set up independently of, and subsequently to the installation of the machine tool.

## Claims

1. Protection apparatus for protecting against a blunt instrument ejected from an operating unit (11) of a machine tool (1) for machining workpieces (74, 76, 78) made of wood or similar materials, comprising barrier means (29, 31, 40, 41; 72, 73) defining a machining area of said operating unit (11) for separating said operating unit (11) from an operator placed near the operating unit (11) and a supporting structure (14) for supporting said barrier means (29, 31, 40, 41; 72, 73), said supporting structure (14) being positionable near said machine tool (1) and comprising guide means (58, 59) for slidably supporting said barrier means (29, 31, 40, 41; 72, 73), wherein said guide means (58, 59) comprises first guide means (58) for slidably supporting door means (29, 31) of said barrier means (29, 31, 40, 41; 72, 73), said door means (29, 31) being arranged for enabling said operator to access said machining area, wherein said first guide means (58) comprises a first guide (22) and a second guide (24) for slidably supporting a first door element (29) and a second door element (31) of said door means (29, 31), **characterised in that** said guide means (58, 59) comprises second guide means (59) for slidably supporting a first barrier element (40; 72) and a second barrier element (41; 73) of said barrier means (29, 31, 40, 41; 72, 73), said first barrier element (40; 72) and said second barrier element (41; 73) being positioned on opposite sides of said operating unit (11) and cooperating with said first door element (29) and with said second door element (31) to define respectively a first machining space (44; 144) and a second machining space (45; 145) in said machining area.

2. Apparatus according to claim 1, wherein said supporting structure (14) extends substantially parallel to an advance direction (A) of said operating unit (11).

3. Apparatus according to claim 1, or 2, wherein said supporting structure (14) has a portal shape.

4. Apparatus according to any preceding claim, wherein said first guide means (58) is positioned on a first side (21) of said supporting structure (14).

5. Apparatus according to any one of claims 2 to 4, as claims 3 and 4 are appended to claim 2, wherein said first guide means (58) extends substantially parallel to said advance direction (A).

6. Apparatus according to any one of claims 2 to 4, as claims 3 and 4 are appended to claim 2, wherein said first guide means (58) extends along a further direction (Z) substantially perpendicular to said advance direction (A).

7. Apparatus according to any one of claims 2 to 4, as claims 3 and 4 are appended to claim 2, wherein said first guide means (58) extends along an arc path which is external with respect to said advance direction (A).

8. Apparatus according to any preceding claim, wherein said first guide (22) and said second guide (24) are fixed to opposite end zones (26) of said supporting structure (14).

9. Apparatus according to any preceding claim, wherein said first guide means (58) comprises a further first guide (23) and a further second guide (25) cooperating respectively with said first guide (22) and with said second guide (24) for slidably supporting said first door element (29) and said second door element (31).

10. Apparatus according to claim 9, wherein said further first guide (23) and said further second guide (25) are fixed to an intermediate zone (27) of said supporting structure (14).

11. Apparatus according to any preceding claim, wherein said first door element (29) and said second door element (31) extend along a curved surface (35).

12. Apparatus according to any one of claims 2 to 11, as claims 3, 8, 9, 11 are appended to claim 2, wherein said second guide means (59) extends substantially parallel to said advance direction (A).

13. Apparatus according to any one of claims 4 to 12, as claims 8, 9 and 11 are appended to claim 4, wherein said second guide means (59) is fixed to a second side (38), opposite said first side (21), of said supporting structure (14).

14. Apparatus according to any preceding claim, wherein said first barrier element (40; 72) and said second barrier element (41; 73) each comprise a crosspiece element (53) overhanging a machining plane (3) of said operating unit (11) and an upright element (48) fixed to said crosspiece element (53) and positioned to the side of said machining plane (3).

15. Apparatus according to claim 14, as claim 14 is appended to claim 6, wherein in said crosspiece element (53) there is mounted screen means (54) that is movable substantially parallel to said further direction (Z) with respect to said crosspiece element (53).

16. Apparatus according to any one of claims 2 to 15, as claims 3, 8, 9, 11 and 14 are appended to claim 2, and comprising first connecting means for connecting said first barrier element (40; 72) and said second barrier element (41; 73) to a carriage (6) which is movable along said advance direction (A) and supports said operating unit (11), so that said first barrier element (40; 72) and said second barrier element (41; 73) are moved by said carriage (6).

17. Apparatus according to any one of claims 2 to 15, and comprising a first motor and a second motor for respectively moving said first barrier element (40; 72) and said second barrier element (41; 73) along said second guide means (59).

18. Apparatus according to any preceding claim, and comprising second connecting means (68, 69) for connecting said first barrier element (40; 72) and said second barrier element (41; 73) to said first door element (29) and to said second door element (31), so that said first door element (29) and said second door element (31) are moved respectively by said first barrier element (40; 72) and by said second barrier element (41; 73).

19. Apparatus according to any preceding claim, and comprising third motor means (28) and fourth motor means (30) for respectively moving said first door element (29) and said second door element (31) between a first position (U) in which said first door element (29) and said second door element (31) enable said operator to access said first space (44; 144) and said second space (45; 145), and a second position (D) in which said first door element (29) and said second door element (31) prevent said operator accessing said first space (44; 144) and said second space (45; 145).

## Patentansprüche

1. Schutzvorrichtung zum Schützen gegen ein stumpfes Instrument, das von einer Funktionseinheit (11) einer Werkzeugmaschine (1) zum Bearbeiten von Werkstücken (74, 76, 78) aus Holz oder ähnlichen Materialien ausgeworfen wird, ein Sperrmittel (29, 31, 40, 41; 72, 73), das einen Bearbeitungsbereich der Funktionseinheit (11) definiert, so dass die Funktionseinheit (11) von einem Bediener getrennt ist, der nahe der Funktionseinheit (11) platziert ist, und eine Tragkonstruktion (14) zum Tragen des Sperrmittels (29, 31, 40, 41; 72, 73) umfassend, wobei die Tragkonstruktion (14) nahe der Werkzeugmaschine (1) positionierbar ist und ein Führungsmittel (58, 59) zum verschiebbaren Tragen des Sperrmittels (29, 31, 40, 41; 72, 73) umfasst, wobei das Führungsmittel (58, 59) ein erstes Führungsmittel (58) zum verschiebbaren Tragen eines Türmittels (29, 31) des Sperrmittels (29, 31, 40, 41; 72, 73) umfasst, wobei das Türmittel (29, 31) so angeordnet ist, dass es dem Bediener gestattet, auf den Bearbeitungsbereich Zugriff zu haben, wobei das erste Führungsmittel (58) eine erste Führung (22) und eine zweite Führung (24) umfasst, um ein erstes Türelement (29) und ein zweites Türelement (31) des Türmittels (29, 31) verschiebbar zu tragen, **dadurch gekennzeichnet, dass** das Führungsmittel (58, 59) ein zweites Führungsmittel (59) umfasst, um ein erstes Sperrelement (40; 72) und ein zweites Sperrelement (41; 73) des Sperrmittels (29, 31, 40, 41; 72, 73) verschiebbar zu tragen, wobei das erste Sperrelement (40; 72) und das zweite Sperrelement (41; 73) an entgegen gesetzten Seiten der Funktionseinheit (11) angeordnet sind und mit dem ersten Türelement (29) und mit dem zweiten Türelement (31) zusammenwirken, so dass sie einen ersten Bearbeitungsraum (44; 144) bzw. einen zweiten Bearbeitungsraum (45; 145) in dem Bearbeitungsbereich definieren.

2. Vorrichtung nach Anspruch 1, bei welcher sich die Tragkonstruktion (14) im Wesentlichen parallel zu einer Vorschubrichtung (A) der Funktionseinheit (11) erstreckt.

3. Vorrichtung nach einem der Ansprüche 1 oder 2, bei welcher die Tragkonstruktion (14) eine Portalform aufweist.

4. Vorrichtung nach einem der vorstehenden Ansprüche, bei welcher das erste Führungsmittel (58) an einer ersten Seite (21) der Tragkonstruktion (14) angeordnet ist.

5. Vorrichtung nach einem der Ansprüche 2 bis 4, soweit Ansprüche 3 und 4 von Anspruch 2 abhängen, bei welcher sich das erste Führungsmittel (58) im Wesentlichen parallel zu der Vorschubrichtung (A) erstreckt.

6. Vorrichtung nach einem der Ansprüche 2 bis 4, soweit Ansprüche 3 und 4 von Anspruch 2 abhängen, bei welcher sich das erste Führungsmittel (58) entlang einer weiteren Richtung (Z) erstreckt, die im Wesentlichen senkrecht zu der Vorschubrichtung (A) ist.

7. Vorrichtung nach einem der Ansprüche 2 bis 4, soweit Ansprüche 3 und 4 von Anspruch 2 abhängen, bei welcher sich das erste Führungsmittel (58) entlang einer Bogenbahn erstreckt, die außerhalb bezüglich der Vorschubrichtung (A) ist.

8. Vorrichtung nach einem der vorstehenden Ansprüche, bei welcher die erste Führung (22) und die zweite Führung (24) an entgegen gesetzten Endzonen (26) der Tragkonstruktion (14) befestigt sind.

9. Vorrichtung nach einem der vorstehenden Ansprüche, bei welcher das erste Führungsmittel (58) eine weitere Führung (23) und eine weitere zweite Führung (25) umfasst, die jeweils mit der ersten Führung (22) und der zweiten Führung (24) zusammenwirken, so dass sie das erste Türelement (29) und das zweite Türelement (31) verschiebbar tragen.

10. Vorrichtung nach Anspruch 9, bei welcher die weitere erste Führung (23) und die weitere zweite Führung (25) an einer Zwischenzone (27) der Tragkonstruktion (14) befestigt sind.

11. Vorrichtung nach einem der vorstehenden Ansprüche, bei welcher sich das erste Türelement (29) und das zweite Türelement (31) entlang einer gebogenen Oberfläche (35) erstrecken.

12. Vorrichtung nach einem der vorstehenden Ansprüche 2 bis 11, soweit Ansprüche 3, 8, 9, 11 von Anspruch 2 abhängen, bei welcher sich das zweite Führungsmittel (59) im Wesentlichen parallel zu der Vorschubrichtung (A) erstreckt.

13. Vorrichtung nach einem der Ansprüche 4 bis 12, soweit Ansprüche 8, 9 und 11 von Anspruch 4 abhängen, bei welcher das zweite Führungsmittel (59) an einer zweiten Seite (38) befestigt ist, die der ersten Seite (21) der Tragkonstruktion (14) entgegen gesetzt ist.

14. Vorrichtung nach einem der vorstehenden Ansprüche, bei welcher das erste Sperrelement (40; 72) und das zweite Sperrelement (41; 73) jeweils ein Querträgerelement (53), das eine Bearbeitungsebene (3) der Funktionseinheit (11) überhängt, und ein aufrechtes Element (48) umfassen, das an dem Querträgerelement (53) befestigt ist und an der Seite der Bearbeitungsebene (3) angeordnet ist.

15. Vorrichtung nach Anspruch 14, soweit Anspruch 14 von Anspruch 6 abhängt, bei welcher in dem Querträgerelement (53) ein Schirmmittel (54) befestigt ist, das im Wesentlichen parallel zu der weiteren Richtung (Z) bezüglich des Querträgerelements (53) beweglich ist.

16. Vorrichtung nach einem der Ansprüche 2 bis 15, soweit Ansprüche 3, 8, 9, 11 und 14 von Anspruch 2 abhängen, und ein erstes Verbindungsmittel umfassend, um das erste Sperrelement (40; 72) und das zweite Sperrelement (41; 73) mit einem Wagen (6) zu verbinden, der beweglich entlang der Vorschubrichtung (A) ist und die Funktionseinheit (11) trägt, so dass das erste Sperrelement (40; 72) und das zweite Sperrelement (41; 73) durch den Wagen (6) bewegt werden.

17. Vorrichtung nach einem der Ansprüche 2 bis 15, und einen ersten Motor und einen zweiten Motor umfassend, um jeweils das erste Sperrelement (40; 72) und das zweite Sperrelement (41; 73) entlang des zweiten Führungsmittels (59) zu bewegen.

18. Vorrichtung nach einem der vorstehenden Ansprüche, und ein zweites Verbindungsmittel (68, 69) umfassend, um das erste Sperrelement (40; 72) und das zweite Sperrelement (41; 73) mit dem ersten Türelement (29) und dem zweiten Türelement (31) zu verbinden, so dass das erste Türelement (29) und das zweite Türelement (31) jeweils durch das erste Sperrelement (40; 72) und durch das zweite Sperrelement (41; 73) bewegt werden.

19. Vorrichtung nach einem der vorstehenden Ansprüche, und ein drittes Motormittel (28) und ein viertes Motormittel (30) umfassend, um jeweils das erste Türelement (29) und das zweite Türelement (31) zwischen einer ersten Position (U), in welcher das erste Türelement (29) und das zweite Türelement (31) dem Bediener gestatten, Zugriff auf den ersten Raum (44; 144) und den zweiten Raum (45; 145) zu haben, und einer zweiten Position (D) zu bewegen, in welcher das erste Türelement (29) und das zweite Türelement (31) den Bediener daran hindern, Zugriff auf den ersten Raum (44; 144) und den zweiten Raum (45; 145) zu haben.

## Revendications

1. Dispositif de protection destiné à protéger d'un instrument contondant éjecté d'une unité de travail (11) d'une machine-outil (1) utilisée pour l'usinage de pièces (74, 76, 78) en bois ou en matériaux similaires, comprenant des moyens de barrière (29, 31, 40, 41 ; 72, 73) définissant une aire d'usinage de ladite unité de travail (11), destinés à séparer ladite unité de travail (11) d'un opérateur placé à proximité de l'unité de travail (11), et une structure de support (14) pour supporter lesdits moyens de barrière (29, 31, 40, 41 ; 72, 73), ladite structure de support (14) étant positionnable à proximité de ladite machine-outil (1) et comprenant des moyens de guidage (58, 59) destinés à supporter de manière coulissante lesdits moyens de barrière (29, 31, 40, 41; 72, 73), dans lequel lesdits moyens de guidage (58, 59) comprennent des premiers moyens de guidage (58) destinés à supporter de manière coulissante des moyens de porte (29, 31) desdits moyens de barrière (29, 31, 40, 41 ; 72, 73), lesdits moyens de porte (29, 31) étant agencés de manière à permettre audit opérateur d'accéder à ladite aire d'usinage, lesdits premiers moyens de guidage (58) comprenant un premier guide (22) et un deuxième guide (24) destinés à supporter de manière coulissante un premier élément de porte (29) et un deuxième élément de porte (31) desdits moyens de porte (29, 31), ***caractérisé en ce que*** lesdits moyens de guidage (58, 59) comprennent des deuxièmes moyens de guidage (59) destinés à supporter de manière coulissante un premier élément de barrière (40 ; 72) et un deuxième élément de barrière (41 ; 73) desdits moyens de barrière (29, 31, 40, 41 ; 72, 73), ledit premier élément de barrière (40 ; 72) et ledit deuxième élément de barrière (41 ; 73) étant positionnés sur des côtés opposés de ladite unité de travail (11) et coopérant avec ledit premier élément de porte (29) et avec ledit deuxième élément de porte (31) pour définir respectivement un premier espace d'usinage (44 ; 144) et un deuxième espace d'usinage (45 ; 145) dans ladite aire d'usinage.

2. Dispositif selon la revendication 1, dans lequel ladite structure de support (14) s'étend de manière sensiblement parallèle à une direction de progression (A) de ladite unité de travail (11).

3. Dispositif selon la revendication 1 ou 2, dans lequel ladite structure de support (14) présente la forme d'un portique.

4. Dispositif selon l'une quelconque des revendications précédentes, dans lequel lesdits premiers moyens de guidage (58) sont placés sur un premier côté (21) de ladite structure de support (14).

5. Dispositif selon l'une quelconque des revendications 2 à 4, lorsque les revendications 3 et 4 sont dépendantes de la revendication 2, dans lequel lesdits premiers moyens de guidage (58) s'étendent de manière sensiblement parallèle à ladite direction de progression (A).

6. Dispositif selon l'une quelconque des revendications 2 à 4, lorsque les revendications 3 et 4 sont dépendantes de la revendication 2, dans lequel lesdits premiers moyens de guidage (58) s'étendent le long d'une autre direction (Z) sensiblement perpendiculaire à ladite direction de progression (A).

7. Dispositif selon l'une quelconque des revendications 2 à 4, lorsque les revendications 3 et 4 sont dépendantes de la revendication 2, dans lequel lesdits premiers moyens de guidage (58) s'étendent le long d'un trajet en arc qui est extérieur à ladite direction de progression (A).

8. Dispositif selon l'une quelconque des revendications précédentes, dans lequel ledit premier guide (22) et ledit deuxième guide (24) sont fixés à des zones d'extrémité opposées (26) de ladite structure de support (14).

9. Dispositif selon l'une quelconque des revendications précédentes, dans lequel lesdits premiers moyens de guidage (58) comprennent un premier guide supplémentaire (23) et un deuxième guide supplémentaire (25) coopérant respectivement avec ledit premier guide (22) et avec ledit deuxième guide (24) pour supporter de manière coulissante ledit premier élément de porte (29) et ledit deuxième élément de porte (31).

10. Dispositif selon la revendication 9, dans lequel ledit premier guide supplémentaire (23) et ledit deuxième guide supplémentaire (25) sont fixés à une zone intermédiaire (27) de ladite structure de support (14).

11. Dispositif selon l'une quelconque des revendications précédentes, dans lequel ledit premier élément de porte (29) et ledit deuxième élément de porte (31) s'étendent le long d'une surface incurvée (35).

12. Dispositif selon l'une quelconque des revendications 2 à 11, lorsque les revendications 3, 8, 9, 11 sont dépendantes de la revendication 2, dans lequel lesdits deuxièmes moyens de guidage (59) s'étendent de manière sensiblement parallèle à ladite direction de progression (A).

13. Dispositif selon l'une quelconque des revendications 4 à 12, lorsque les revendications 8, 9, 11 sont dépendantes de la revendication 4, dans lequel lesdits deuxièmes moyens de guidage (59) sont fixés à un deuxième côté (38), opposé audit premier côté (21), de ladite structure de support (14).

14. Dispositif selon l'une quelconque des revendications précédentes, dans lequel ledit premier élément de barrière (40 ; 72) et ledit deuxième élément de barrière (41 ; 73) comprennent chacun un élément de traverse (53) en porte-à-faux au dessus d'un plan d'usinage (3) de ladite unité de travail (11) et un élément vertical (48) fixé audit élément de traverse (53) et placé à côté dudit plan d'usinage (3).

15. Dispositif selon la revendication 14, lorsque la revendication 14 est dépendante de la revendication 6, dans lequel, dans ledit élément de traverse (53), sont montés des moyens d'écran (54) qui sont mobiles de manière sensiblement parallèle à ladite autre direction (Z), en relation avec ledit élément de traverse (53).

16. Dispositif selon l'une quelconque des revendications 2 à 15, lorsque les revendications 3, 8, 9, 11 et 14 sont dépendantes de la revendication 2, et comprenant des premiers moyens de raccordement pour relier ledit premier élément de barrière (40 ; 72) et ledit deuxième élément de barrière (41 ; 73) à un chariot (6) qui est mobile le long de ladite direction de progression (A) et supporte ladite unité de travail (11), de telle façon que ledit premier élément de barrière (40 ; 72) et ledit deuxième élément de barrière (41 ; 73) soient déplacés par ledit chariot (6).

17. Dispositif selon l'une quelconque des revendications 2 à 15, et comprenant un premier moteur et un deuxième moteur pour déplacer respectivement ledit premier élément de barrière (40 ; 72) et ledit deuxième élément de barrière (41 ; 73) le long desdits deuxièmes moyens de guidage (59).

18. Dispositif selon l'une quelconque des revendications précédentes, et comprenant des deuxièmes moyens de raccordement (68, 69) pour relier ledit premier élément de barrière (40 ; 72) et ledit deuxième élément de barrière (41 ; 73) audit premier élément de porte (29) et audit deuxième élément de porte (31) afin que ledit premier élément de porte (29) et ledit deuxième élément de porte (31) soient respectivement déplacés par ledit premier élément de barrière (40 ; 72) et par ledit deuxième élément de barrière (41 ; 73).

19. Dispositif selon l'une quelconque des revendications précédentes, et comprenant des troisièmes moyens de moteur (28) et quatrièmes moyens de moteur (30) pour déplacer respectivement ledit premier élément de porte (29) et ledit deuxième élément de porte (31) entre une première position (U) dans laquelle ledit premier élément de porte (29) et ledit deuxième élément de porte (31) permettent audit opérateur d'accéder audit premier espace (44 ; 144) et audit deuxième espace (45 ; 145), et une deuxième position (D) dans laquelle ledit premier élément de porte (29) et ledit deuxième élément de porte (31) empêchent ledit opérateur d'accéder audit premier espace (44 ; 144) et audit deuxième espace (45 ; 145).
